# EUROPEAN PATENT SPECIFICATION

(11) **EP 3 573 729 B1**
(45) Date of publication and mention of the grant of the patent: **20.08.2025**
(21) Application number: 18744778.4
(22) Date of filing: 25.01.2018
(51) Int. Cl.: A63F 9/08, A63F 13/35, A63F 13/98, A63F 13/245, A63F 9/24

(54) **TRACKING THREE-DIMENSIONAL PUZZLE COMPONENTS USING EMBEDDED SIGNATURE AND ROTATION SENSORS**
VERFOLGUNG DREIDIMENSIONALER PUZZLEKOMPONENTEN UNTER VERWENDUNG VON EINGEBETTETER SIGNATUR UND ROTATIONSSENSOREN
SUIVI DE COMPOSANTS DE PUZZLE TRIDIMENSIONNEL À L'AIDE DE CAPTEURS DE SIGNATURE ET DE ROTATION INTÉGRÉS

(30) Priority: 25.01.2017 US 201762450087 P
(43) Date of publication of application: 04.12.2019
(73) Proprietor: Particula Ltd., Binyamina 3057746 (IL)
(72) Inventor: DOR, Udi, Binyamina 3057746 (IL); DOR, Amit, Givat Shmuel 5403411 (IL)
(74) Representative: Boult Wade Tennant LLP
(86) International application number: PCT/IB2018/000411
(87) International publication number: WO 2018/138586

(56) References cited:
- WO-A1-2008/131613
- WO-A1-2016/173476
- WO-A1-2016/173476
- CN-A- 102 068 814
- CN-A- 102 068 814
- CN-A- 104 874 176
- CN-A- 106 110 651

## Description

### BACKGROUND

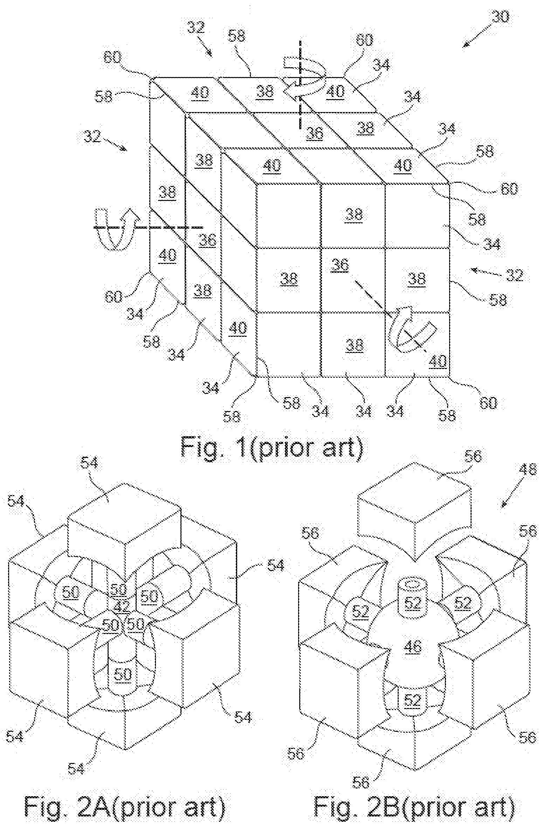

Puzzles of various types for people of all ages are embodied having a wide selection of shapes, sizes, and complexity. One popular non-limiting example of a three-dimensional puzzle is known as the Rubik's Cube (originally called the "Magic Cube"), referenced hereinbelow as simply "cube" and illustrated in Fig. 1 as cube 30. Cube 30 has six faces 32 (three of them visible in Fig. 1), and each face 32 has a three-by-three array of nine face segments 34 (not all labeled for clarity).

The outer surface of the cube 30 is formed by an aggregation of what appears to be twenty-six (26) smaller component cubes, hereinafter referred to as "cubelets," 36, 38, 40. The cubelets 36, 38, 40 are not truly cubes but appear so from outside the cube 30 because their face segments 34 on the outer surface of the cube 30 resemble the faces that true cubes would have on the outer surface of the cube 30, if they were the components from which cube 30 were made. That is, the six central cubelets 36 at the center positions of faces 32 each have one face segment 34, the twelve central edge cubelets 38 at the edges of the faces 32 but not at the vertices (corners) of faces 32 each have two face segments 34, and the eight vertex cubelets 40 at the vertices of the cube 30 each have three face segments 34. Each cubelet 36, 38, 40 is free to rotate relative to an adjacent cubelet 36, 38, 40.

Within the cube 30 is an inner core, which may be embodied, as non-limiting examples, as the core 42 of cube 44 in Fig. 2A or the core 46 of cube 48 in Fig. 2B. In the embodiment of Fig. 2A, the core 42 resembles a point in space from which six posts 50 extend outward. In the embodiment of Fig. 2B, the core 46 takes a spherical form with posts 52 mounted thereon. In both examples, each post 50 or 52 contacts one of the six central cubelets 54, 56 on a different face of the cube 44, 48. The posts 50, 52 are free to rotate relative to the core 42, 46 or relative to the central cubelets 54, 56 they contact, thereby enabling each face of the cube 44, 48 to rotate relative to the core 42, 46 about the axis of the post 50, 52 it contacts. The posts 50, 52 for these cube 44, 48 constrain the central cubelets 54, 56 from axial movement along the posts 50, 52 and away from the core 42, 46.

The central edge cubelets and the vertex cubelets (not shown in Figs. 2A and 2B) do not contact the posts 50, 52. They however do not separate from the cube 44, 48 due to elaborate shapes of their bases. These bases enable the cubelets to slide relative to each other and to return to form the cube shape at the completion of ninety-degree rotations (discussed below). The bases also constrain the central cubelets 54, 56 from axial movement along the posts 50, 52 toward the core 42, 46. The sophisticated details of the base construction are known and thus beyond the scope of the present disclosure.

Within a single face 32, each face segment 34 is free to move relative to the others. As illustrated in Fig. 1, two adjacent faces 32 share a common edge 58, and a face segment 34 sharing an edge with a face segment 34 of an adjacent face 32 is constrained not to move relative to that face segment 34 of the adjacent face 32. As alluded above, for each vertex face segment 34 there are three face segments 34, in which each face segment 34 is adjacent to the other two face segments 34, sharing a common vertex 60, and the three face segments 34 adjacent the common vertex 60 are constrained not to move relative to each other. As also alluded above, for each non-vertex edge face segment 34 there is another non-vertex edge face segments 34 on an adjacent face 32, and the two non-vertex edge face segments 34 are constrained not to move relative to each other. Accordingly, each face 32 has a center face segment 34, four vertex face segments 34, and four non-vertex edge face segments 34.

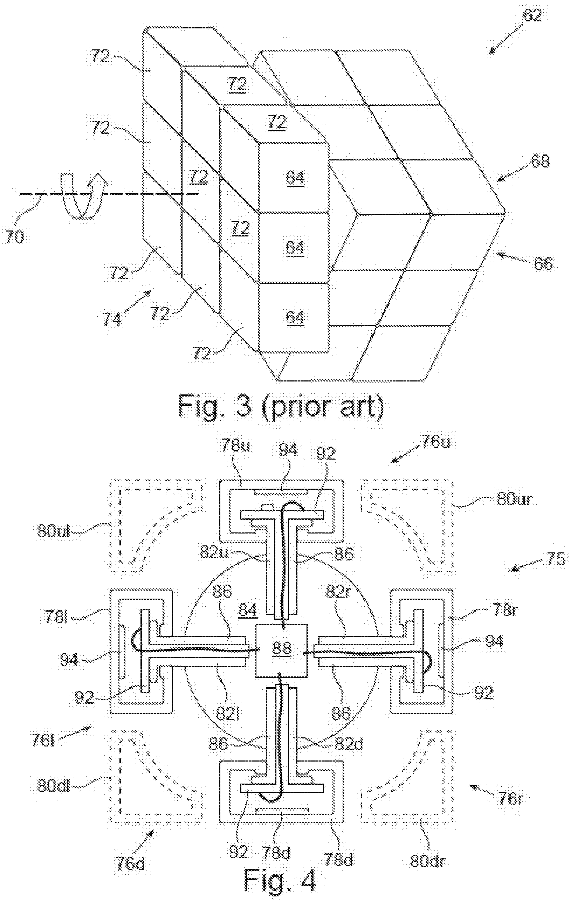

With reference to the cube 62 in Fig. 3, edge face segments 64 on one face 66 may be repositioned to an adjacent face 68 by rotating them ninety degrees relative to the rest of the cube 62. The axis 70 of rotation is parallel to both the face 66 containing the edge face segments 64 before the rotation and the face 68 containing the edge face segments 64 after the rotation. This rotation repositions nine cubelets 72 relative to the rest of the cube 62. Accordingly, the rotating face segments consist of those on one face 74 plus the edge face segments from the adjacent faces that share an edge with that one face 74.

Cubes 30 and 62 of Figs. 1 and 3 are often referred as "3x3 cubes," as they have 3x3 arrays of cubelets at each face. Three-dimensional puzzles of this nature are not limited to 3x3 cubes, though. The cubes can have different amounts of cubelets on a face, and two examples are the 2x2 and 4x4 cubes. The shells of the three-dimensional puzzles are also not limited to cubical form, and the shell segments are not limited to cubelets. Two examples are three-dimensional puzzles having spherical or pyramidal shells. Accordingly, features of the invention disclosed herein are not limited to implementations on 3x3 cubes.

With respect to cubes such as those of Figs. 1 and 3, the face segments may have one of six colors, such as white, red, blue, orange, green, and yellow. One typical way of playing a game with cube 30, 62 is to rearrange the cubelets of the cube 30, 62 so that each face has face segments of only one color. Three-dimensional puzzles of other shapes and numbers of shell segments are constructed and played analogously. Also, neither the prior art nor applications of inventive concepts discussed below are limited to face segments distinguished by colors. Instead, the face segments may differ by displaying thereon differing numbers, shapes, patterns, and symbols, as non-limiting examples.

For beginners, arranging all face segments accordingly is both complicated and challenging, and many players seek assistance through a variety of text and/or video guides. These guides present solution algorithms that many players can find difficult to understand. The present inventor knows of no prior-developed system of interactive feedback to guide a new user more easily to a solution.

More advanced players can regard quickly solving these puzzles as a type of competition, sometimes referred to as "speedcubing" and "speedsolving." Leagues and tournaments are available in which the players strive to solve the puzzles as fast as possible. Participants constantly strive to improve their performance, and such training needs some type of measurement of time and some type of monitoring of face segments relative to each other. Accordingly, there is an unmet need for interactive feedback and guidance to both new and advanced players based on the relative positions of the face segments of a cube.

US-2018/0161668 discloses a " puzzle cube having prompting and recording functions".

CN 102 068 814 A describes a "magic cube with a memory function, which can direct users to finish the recovery of the magic cube".

### SUMMARY

The present invention provides a three-dimensional puzzle according to claim 1 and a method of determining shell pattern on a three-dimensional puzzle in line with claim 5. Also disclosed are a method of correcting errors in the determination of patterns on a three-dimensional puzzle, and methods of tracking patterns on a three-dimensional puzzle.

Further disclosed are a three-dimensional puzzle having a shell, a core, multiple unique signatures, and at least one signature sensor. The shell has at least four faces and is formed by multiple shell segments, each shell segment being free to move relative to an adjacent shell segment. The core within the shell, the faces being free to rotate relative to the core about axes extending from the core toward the faces. The multiple unique signatures are located at the shell segments. At least one signature sensor within the shell provides data to processing circuitry based on sensed signatures to determine shell segment patterns.

Additionally disclosed is a method of determining patterns on a three-dimensional puzzle, the puzzle having a shell formed by multiple shell segments, each shell segment being free to move relative to an adjacent shell segment, and multiple unique signatures located at the shell segments. The method including: from within the shell using at least one signature sensor to sense the unique signatures of proximate shell segments and determining their identities based on the sensed unique signatures; rotating a puzzle face to bring other shell segments proximate the at least one signature sensor for sensing other unique signatures and determining the identities of the other proximate shell segments based on the other sensed unique signatures; using rotation sensors to determine the new location of the earlier identified shell segments after the rotation; and continuing to rotate puzzle faces to determine identities of other shell segments and continuing to determine new locations of rotated shell segments until all shell segments are identified.

Further disclosed is a method of correcting errors in the determination of patterns on a three-dimensional puzzle, the puzzle having a shell formed by multiple shell segments, each shell segment being free to move relative to an adjacent shell segment, and multiple unique signatures located at the shell segments. The method includes: after a perceived rotation of a puzzle face, (1) tracking the rotation of shell segments as if the rotation were completed and (2) tracking the rotation of shell segments as if the rotation were not completed; from within the shell using at least one signature sensor to sense the unique signatures of proximate shell segments and determining their identities based on the sensed unique signatures; dismissing a tracking controverted by the identification of the proximate shell segments; and confirming the tracking that is not dismissed.

The disclosure also provides a method of tracking patterns on a three-dimensional puzzle, the puzzle having a shell formed by multiple shell segments, each shell segment being free to move relative to an adjacent shell segment, and multiple unique signatures located at the shell segments. The method includes: obtaining an initial pattern; from within the shell using at least two signature sensors to sense the unique signatures of shell segments moving into proximity; and providing data to processing circuitry based on the sensed signatures; wherein the processing circuitry determines from the data the identification of the proximate shell segments to determine a new shell segment pattern.

There is further disclosed a method of tracking patterns on a three-dimensional puzzle, the puzzle having a shell that has at least four faces and is formed by multiple shell segments, each shell segment being free to move relative to an adjacent shell segment, and the faces being free to rotate about axes extending from a core toward the faces. The method includes: obtaining an initial pattern; sensing rotation of the faces; and providing data to processing circuitry based on the rotation of the faces; wherein the processing circuitry determines from the face rotation data the movement of the shell segments to determine a new shell segment pattern.

Embodiments of the present invention are described in detail below with reference to the accompanying drawings, which are briefly described as follows:

### BRIEF DESCRIPTION OF THE DRAWINGS

The invention is described below in the appended claims, which are read in view of the accompanying description including the following drawings, wherein:
Fig. 1 shows a 3x3 cube as one type of prior art three-dimensional puzzle;
Figs. 2A and 2B show typical prior art cores for three-dimensional puzzles;
Fig. 3 illustrates the rotation of a face of a prior art three-dimensional puzzle;
Fig. 4 provides a cross-sectional illustration of a cubical puzzle according to one embodiment of the invention;
Figs. 5-8, 9A, and 9B illustrate multiple alternate embodiments of rotation sensors in accordance with the invention;
Fig. 10 illustrates a specific shade of color as a unique signature;
Fig. 11A illustrates a face of an example type of cube;
Fig. 11B illustrates the side of the face of Fig. 11A that faces the core;
Fig. 12 illustrates an alternate to the way illustrated in Fig. 10 to provide a specific shade of color as a unique signature;
Fig. 13A illustrates a face of an example type of cube that is an alternate to the type of Fig. 11A;
Fig. 13B illustrates the side of the face of Fig. 13A that faces the core;
Figs. 14A and 15B illustrate an optical sensor's field of view in an embodiment of the invention;
Figs. 15A and 15B illustrate an optical sensor's view when facing a vertex cubelet;
Fig. 15C illustrates an optical sensor's field of view of a vertex cubelet's region of unique signatures;
Fig. 16 illustrates an RGB sensor's field of view of a vertex cubelet's region of unique signatures;
Figs. 17A and 17B illustrate tracking during reset/initialization operations;
Figs. 18 illustrates a different embodiment of tracking during reset/initialization operations;
Fig. 19 illustrates a scenario for the error correction; and
Figs. 20 and 21 provide flow charts representing embodiments of pattern tracking.

### DETAILED DESCRIPTION

The invention summarized above and defined by the claims below will be better understood by referring to the present detailed description of embodiments of the invention. This description is not intended to limit the scope of claims but instead to provide examples of the invention.

In a first exemplary embodiment of the invention, the shell of the three-dimensional puzzle has six faces, which form a cube resembling the 3x3 type illustrated in Fig. 1. Accordingly, the shell segments for this puzzle are six central cubelets, eight vertex cubelets, and twelve central edge cubelets, and each cubelet is free to move relative to an adjacent cubelet. The central cubelets are each located at a different face of the cube and are each contact a separate post extending from a core at the center of the cube. The individual faces of the cube are free to rotate relative to the core about axes that extend from the core through the posts and toward the faces.

Fig. 4 provides a cross-sectional illustration of the cube 75 of this embodiment. Visible are the four faces 76u, 76r, 76d, 761 and their associated central cubelets 78u, 78r, 78d, 781, respectively. Central edge cubelets 80ul, 80ur, 80dr, 80dl are shown each in dashed lines between two central cubelets. Central cubelets 78u, 78r, 78d, 781 contact and rotate relative to posts 82u, 82r, 82d, 821, respectively, extending from core 84. That is, in this embodiment, the central cubelets 78u, 78r, 78d, 781 rotate relative to the posts 82u, 82r, 82d, 821 and the core 84, but the posts 82u, 82r, 82d, 821 do not rotate relative to the core 84.

As illustrated in Fig. 4, the central cubelets 78u, 78r, 78d, 781 ends of the posts 82u, 82r, 82d, 821 penetrate the bases of the central cubelets 78u, 78r, 78d, 781 and have a greater diameter than the majority of the shaft. The changing diameter provides a shape that resembles to some extent the shape of a nail. Accordingly, the greater diameter of the ends of the posts 82u, 82r, 82d, 821 constrains the central cubelets 78u, 78r, 78d, 781 from axial movement away from the core 84 while allowing rotational movement of the central cubelets 78u, 78r, 78d, 781 with respect to the core 84. The posts 82u, 82r, 82d, 821 may be made of a low-friction plastic material to enable a smooth rotation.

The posts 82u, 82r, 82d, 821 are hollow, and leads 86 extend within the posts 82u, 82r, 82d, 821 to connect rotation sensors (discussed next) to processing circuitry 88 located within the core 84. In alternate implementations, the processing circuitry may be located in the space bounded the surface of the core 84 and the faces 76u, 76r, 76d, 761 the cube 75, for example, on the outer surface of the core 84. The processing circuitry 88 includes a rechargeable battery (not shown for clarity) as its power source. A charging interface 90 located in central cubelet 78u and accessed by opening central cubelet 78u (details of access hatch not shown for clarity) is electrically connected to the battery by leads (not shown for clarity), which extend through hollow post 82u. The charging interface 90 may be a commercial off the shelf standard socket or a custom made socket as decided by one skilled in the art.

This embodiment has for each face 76u, 76r, 76d, 761 a rotation sensor, respectively, that senses the rotations of the face 76u, 76r, 76d, 761 relative to the core 84. The rotation sensors typically comprise sensing circuitry 92 mounted at the ends of the posts 82u, 82r, 82d, 821 and rotation indicating discs 94 mounted in the interior of the central cubelets 78u, 78r, 78d, 781 adjacent the face segments.

Rotations sensors may be implemented in a variety of ways. The rotation sensors used in this embodiment measure the rotation amplitude as well as the direction. Examples of such rotation sensors include quadrature sensors (quadrature encoders) and absolute sensors (absolute rotation angle provided relative to a known initial state).

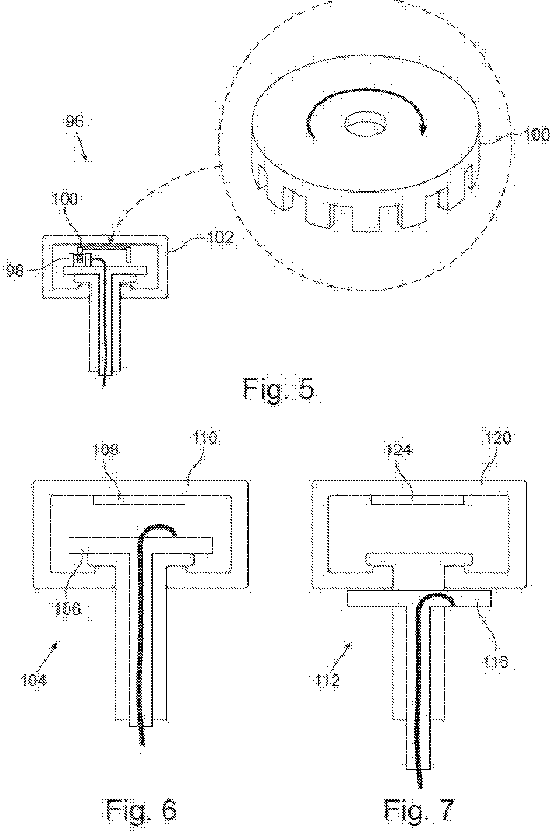

For example, rotation sensor 96 in Fig. 5 has as sensing circuity an optical sensor 98 and as a rotation indicating disc a toothed wheel 100 (or slotted/coded disc). The toothed wheel 100 is positioned to block or to allow light to pass from an LED to the optical sensor 98 as the central cubelet 102 and thus the associated face rotate, and the sensor 98 sends its readings to the processing circuity.

As another example, a rotation sensor may be implemented as rotation sensor 104 in Fig. 6, in which the sensing circuitry is a reflective optical sensor 106 , and the rotation indicating disc is a slotted disc 108. The disc 108 rotates with the cubelet 110 and the reflective sensor 106 sends signals indicative of the rotation to the processing circuity.

As another example, a rotation sensor may be implemented with the sensing circuitry being a magnetic sensor, and the rotation indicating disc being a multi-pole disc magnet. The multi-pole disc magnet rotates with the cubelet and the magnetic sensor sends signals indicative of the rotation to the processing circuity. Other contactless sensor examples include capacitive and inductive sensors with the rotation indicating disc being the corresponding technology for the specific sensor, as non-limiting examples. Contacting (mechanical) rotation sensors may be used instead.

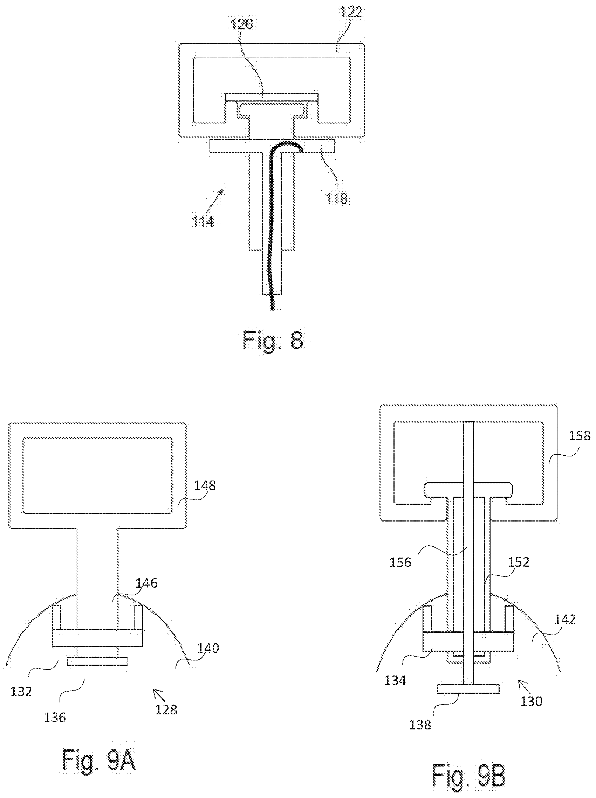

Figs. 7 and 8 show two more alternate implementations of rotation sensors. In both rotation sensors 112, 114 of Figs. 7 and 8, respectively, the sensing circuitry 116, 118 is mounted outside the cubelet 120, 122 and closer to the core. For rotation sensor 112 of Fig. 7, the rotation indicating disc 124 is mounted in the interior of the cubelet 120 adjacent to its face segment, as in the implementation of Fig. 6, but for rotation sensor 114 of Fig. 8, the rotation indicating disc 126 is mounted still in the interior of the cubelet 122 but closer to the sensing circuitry.

Figs. 9A and 9B illustrate other alternate implementations of rotation sensors 128, 130, respectively. Here, both the sensing circuitry 132, 134 and the rotation indicating disc 136, 138 are positioned within the core 140, 142. The sensing circuitry 132, 134 remains stationary with respect to the core 140, 142. The post 146, cubelet 148, and rotation indicating disc 136 of rotation sensor 128 rotate together relative to the core 140. In contrast, the post 152 of rotation sensor 130 is non-rotatively fixed to the core 142. An interior rod 156 connects the cubelet 158 to the rotation indicating disc 138, and thus the three elements rotate together.

Although not present in some embodiments of the invention, the cube of the embodiment of Fig. 4 includes a signature sensor within the cube and multiple unique signatures located at the cubelets. As constructed, the signature sensor provides data to the processing circuitry 88 based on sensed signatures to determine cubelet patterns on the cube. That is, the data enables the determination of both the identity of a cubelet and its orientation.

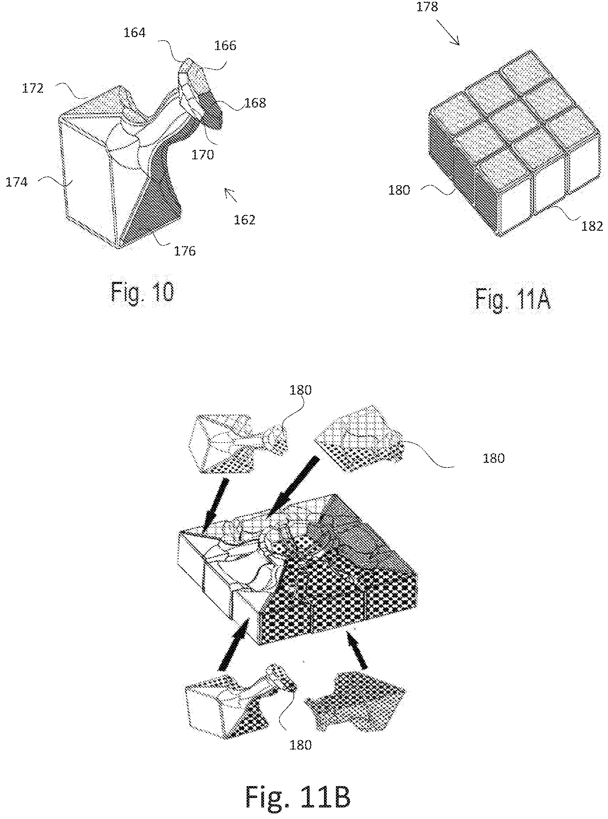

An example of a signature sensor is an optical sensor, and a corresponding example of a unique sensor is a specific shade of color, as represented in Fig. 10. A vertex cubelet 162 has three face segments, each having a separate color. A spherical segment 164 is the part of the cubelet 162 that is closest to the core, and the segment 164 has colors 166, 168, 170 that each correspond to a different color of the three face segments 172, 174, 176 that are visible externally. The spherical segment 164 is visible from the cube's core. An optical sensor positioned within the cube, for example, at the core can sense the colors on the part of the spherical segment 164 within the field of view of the optical sensor and provide data to processing circuitry accordingly to determine the color of the corresponding face segment(s). (Color determination may be limited to one face segment depending on what part of the spherical segment passed within the field of view of the optical sensor and the type of optical sensor used.) The central edge cubelets 80ul, 80ur, 80dr, 80dl of the cube 75 of Fig. 4 also have colors on spherical segments that each corresponds to a different color of the two face segments that are visible externally. The optical sensor can sense the colors on the part of the spherical segment of a central edge cubelet within its field of view and provide data to the processing circuitry to determine the color of the corresponding face segment(s).

The colors on the spherical segment matching the colors of the face segments is a natural result, if the vertex cubelets and the central edge cubelets are manufactured using three and two, respectively, separate solid-colored pieces. For example, such configuration is common when manufacturing the Dayan Cube, which competes with the Rubik's Cube. Fig. 11A illustrates a top face 178 of such type of cube in which all face segments have the same color, and two rows of cubelets 180,182 on the front left and front right faces have colors that differ from the color of the top face 178 Fig. 11B illustrates the sides of these cubelets that face the core, so it is clear that the colors on the spherical segments 180 match colors of the sides of the cubelets that form the exterior faces.

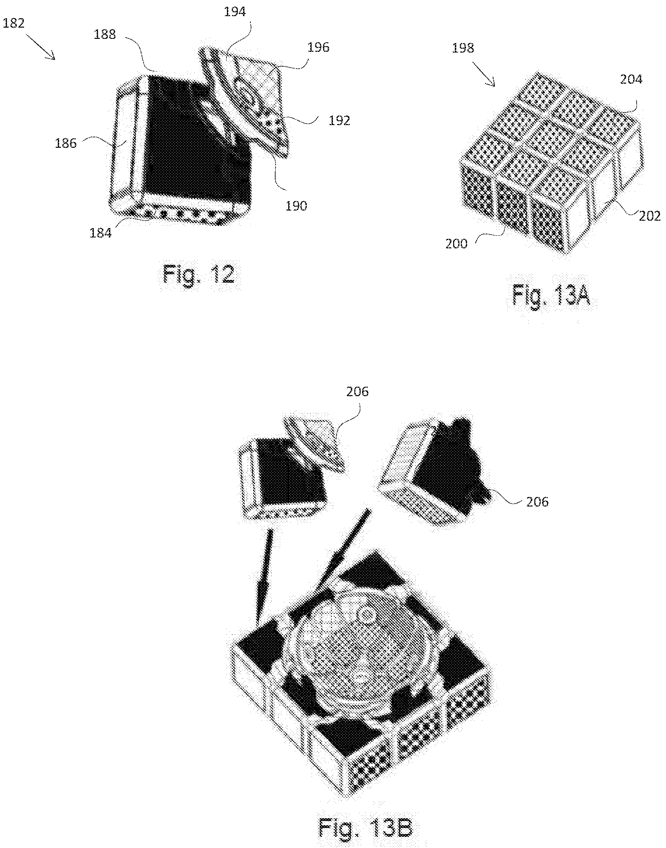

Some cubes, though, such as the Rubik's Cube, are manufactured using plastic of a single color, and the face segments are later colored, for example, by placing stickers thereon. Note the cubelet 182 in Fig. 12, which has stickers 184 ,186, 188_ on the face segments to provide a variety of colors. Alternately, paints or other visually-distinctive means may be applied. The spherical segment 190 also has applied thereon stickers 192,194,196 of colors that correspond to the stickers 184,186,188on the face segments. Fig. 13A illustrates a top face 198 of such type of cube in which all face segments have the same color, and two rows of cubelets 200,202 __ on the front left and front right faces have colors that differ from the color of the top face 204. Fig. 13B illustrates the sides of these cubelets that face the core, so it is clear that the colors on the spherical segments 206 match colors of the sides of the cubelets that form the exterior faces.

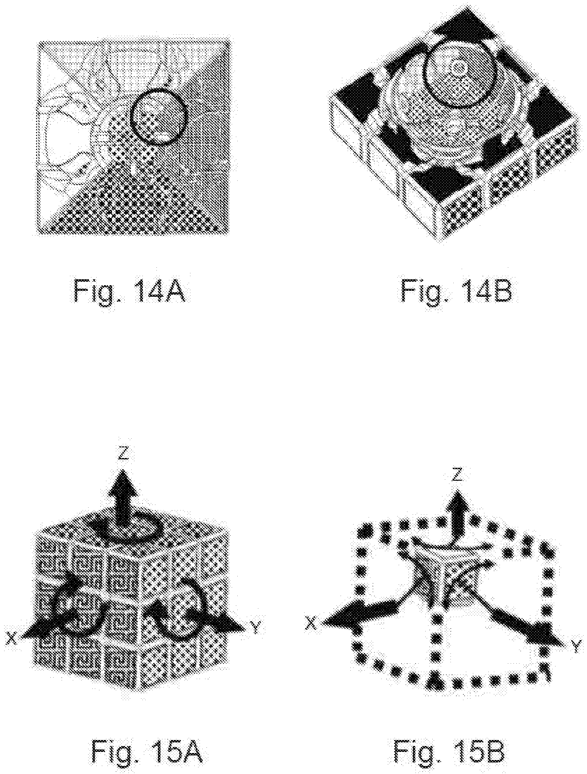

Figs. 14A and 15B indicate the optical sensor's view of a vertex element's unique signatures. The vertex element can rotate, with a face, in three planes. Knowing which face rotates provides an indication of the new positions (the positions after the rotation) of each of the face segments of the rotated face and new positions of twelve adjacent face segments that share edges with the rotated face. Because employing one sensor enables the tracking of the face segments of three faces, employing two sensors, positioned at opposite vertices of the cube, enables the tracking of the face segments of each of the six faces. Reference is made to the following:

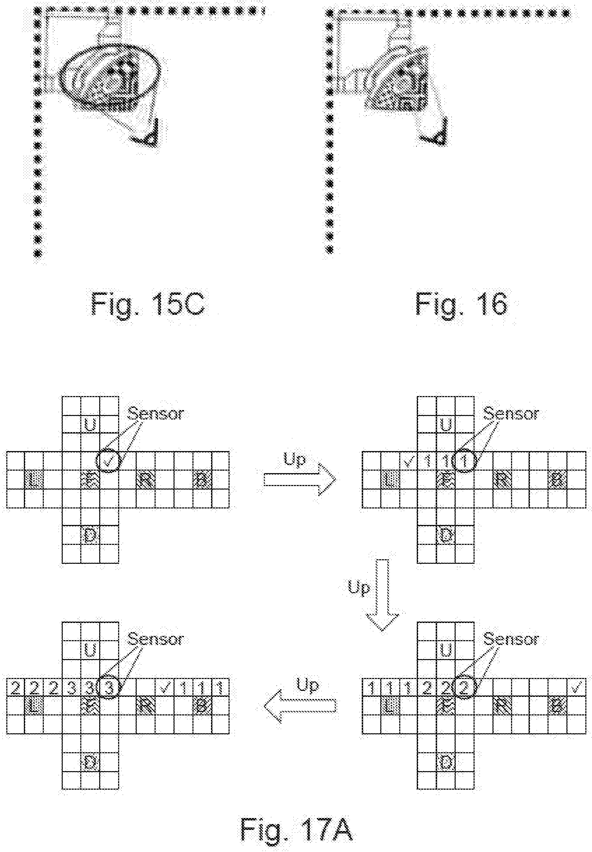

Figs. 15A and 15B illustrate three face rotations that one optical sensor can view when facing a vertex element's coded region. Such configuration was modeled such that the optical sensor viewed a vertex element's region of unique signatures as shown below in Fig. 15C.

In some embodiments, the unique signatures are unique color signatures, and the optical sensor is an RGB sensor. The ability to distinguish between multiple colors may be used to uniquely code any piece of the puzzle in a way that the sensor can identify the colors of that piece and its absolute orientation. For example, consider the sample vertex element that is coded by three unique colors as in Fig. 16. A focused RGB sensor with a narrowly-focused field of view (achievable by optical accessories, such as a lens and focused light beam) integrates the colors within that field of view to output a specific color that is associated with both a particular puzzle element (the colors of the face segments) and the element's particular orientation.

In yet other embodiments, three-dimensional puzzles can be constructed such that the unique signatures are RFID or NFC codes, and the signature sensor is an RFID or NFC sensor.

In some embodiments, the processing circuitry is located at the core and includes sensory indicators for the user. Examples of indicators are LEDs, lights, speakers, and/or vibration mechanism, as non-limiting examples, to provide the user a variety of messages, such as a low battery and time to "start playing." The processing circuitry may also have an IMU sensor operative to sense the orientation of the shell.

The three-dimensional puzzle may include communication circuitry to transmit shell segment pattern data to an external client, such as a smartphone or tablet. The shell segment pattern data may be transmitted using Wi-Fi technology or Bluetooth technology.

The invention may be embodied as any of the three-dimensional puzzles disclosed herein plus the external client. The external client may have a display to show the shell segment pattern and/or the orientation of the shell based on data from the IMU. Not in accordance with the claimed invention, the external client may have the processing circuitry to receive the data from the signature sensor to determine shell segment patterns. The external client may have circuitry to transmit shell segment pattern data via the Internet.

Some embodiments of the invention may include a reset and error correction mechanism, to respond to a situation in which a rotation was not properly sensed. For example, if the left face were rotated but not sensed, the determination of the resulting face segment pattern would be incorrect, and so would any subsequent rotation if the unsensed rotation remained unnoticed. Accordingly, embodiments of the invention include dedicated absolute sensors, which detect unique pieces in pre-defined locations. A single sensor is sufficient, but additional similar sensors may be employed for faster error correction.

Some embodiments of reset and error correction of a 3x3 cube position a single face segment determination sensor in a position, such as in or on the core, where it may monitor a corner location. Each face segment has on or near its base an element to be sensed (such as a unique color to be sensed by an RGB sensor) to provide to the face segment determination sensor the unique identification of the face segment. Upon execution of a short sequence of movements, the system may determine the entire face segment pattern of the cube using data from the face segment determination sensor and the face rotation sensors discussed above.

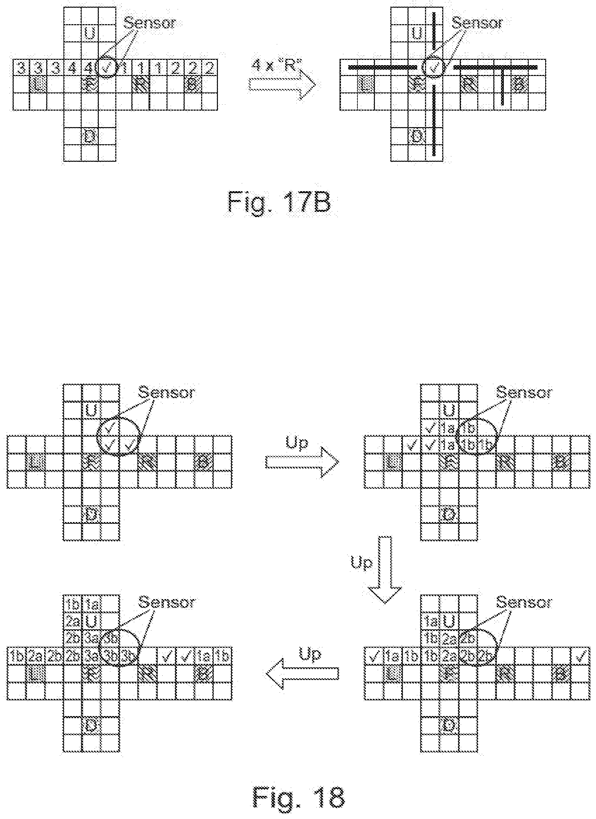

One method of determining patterns, which is useful for reset/initializations, is discussed with reference to Figs. 17A and 17B. As shown, in which the up, down, left, right, front, and back faces are shown represented by U, D, L, R, F, and B, respectively. Initially, only the colors of the central face segments and the face segment at the sensed corner are known. That face segment at the corner is denoted with a check, and the face segments in which the colors are unknown are represented as blank squares. The initial state is shown in the top-left face segment mapping in Fig. 17A.

During a single clockwise rotation of the "Up" face, the sensor detects the identities of the three face segments that pass by it, while in parallel the system calculates the new location of the face segment that was detected before the rotation. Accordingly, the top-right face segment mapping in Fig. 17A indicates with the check the new position of the first detected face segment and indicates the newly detected face segments with a "1" in each square. With the next "Up" rotation (see bottom-right face segment mapping in Fig. 17A), three more face segments are identified (each marked by "2"), and after the third "Up" rotation (bottom-left face segment mapping in Fig. 17A) three more face segments are identified (each marked by "3"). After four "Up" rotations (not shown), the cube returns to its initial state, and 4x3 (twelve) face segments are identified.

Next, with reference to Fig. 17B, the "Right" face is rotated four times, and ten additional face segments are identified. The right face segment map indicates the newly identified face segments by a vertical line in the square.

To identify additional face segments, the user simply needs to continue playing the cube to eventually cause the remaining unidentified face segment to pass by the sensor. For example, if the user makes two "U" rotations, a subsequent clockwise "R" rotation enables the sensor to identify three additional face segments. After enough rotations, all face segments are identified.

The system may be embodied so that the sensor identifies a face passing near it and also faces sharing the same supporting base. Such system provides information regarding the one or two adjacent faces constrained in a fixed position relative to the one face. (All faces to be sensed are permanently adjacent a face sharing a common edge, and a face located at a vertex is permanently adjacent two faces.) Fig. 18 illustrates the effect of a system designed accordingly.

As in the preceding embodiment, the process begins with no face segments identified beyond the fixed central face segments. Fig. 18 shows the effect of three consecutive "Up" rotations. A base for a vertex supports three face segments, and that is how three face segments are initially identified and marked with checks instead of just one face. After the first "Up" rotation, five additional face segments are identified as shown in the upper-right drawing. The identified faces have a "1" indicating that they were identified during the first rotation, and "a" is used for face segments that are not at a vertex and "b" is used for face segments that are at a vertex.

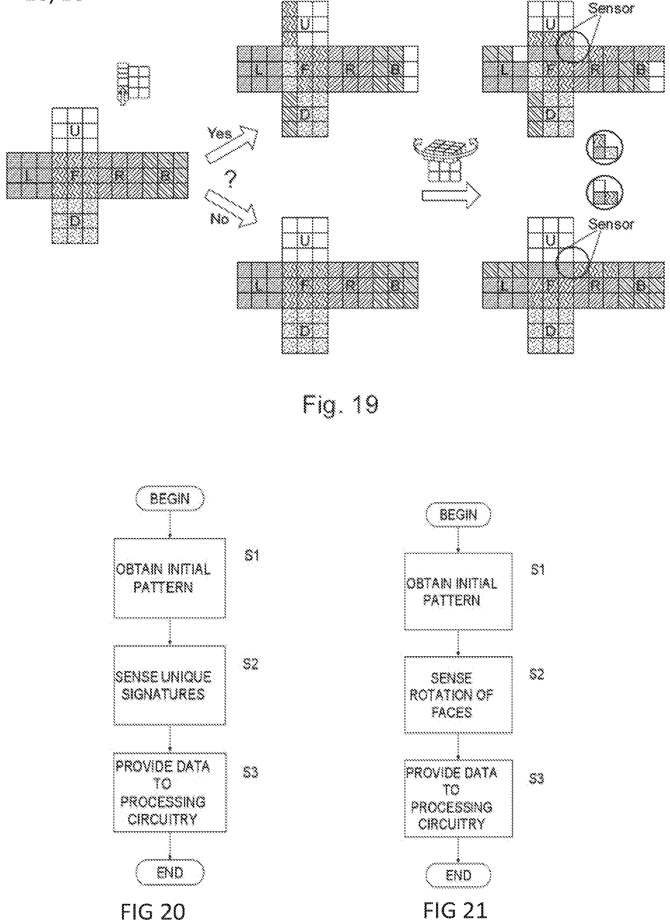

Fig. 19 illustrates a scenario for the error correction. In this case, the system received an unclear rotation indication, so there is doubt as to whether a face really did rotate 90 degrees. The system will consider two possibilities: (1) that the face rotated 90 degrees; and (2) that the face did not rotate at all. After enough subsequent rotations, the sensor will eventually identify a face or base of a face that indicates whether there was a rotation.

With reference to Fig. 19, an example is considered of tracking a cube's patterns starting with a solved cube (mapping at the far left). Here, the system sensed the beginning of a rotation of the "Left" face, but due to certain circumstances it was unclear whether the move was completed or canceled. Thus, the cube may be positioned in one of the middle states in the above diagram, "Yes" indicate the move was completed and "No" indicating the move was not completed. In that state the sensor would not be able to determine whether the move was completed, because it would see the same White-Green-Red piece. In this embodiment, the system would continue to track movement understanding that either of the possibilities will eventually be proven correct.

In this example, the next move is an "Up" rotation, and the two right side drawings show that a different trio of face segments passes to the sensor. Accordingly, the face segments are identified and the system knows which of the two possibilities (the left face rotated, or it did not) is the correct one.

It is understood that, while in the simplified example above two alternative pattern possibilities were considered, the system can be implement to consider many more alternative simultaneously.

In alternate embodiments, additional sensors may be employed. Accordingly, error correction requires fewer tracked rotations.

In a 3x3 cubic puzzle of Fig. 4, cube 76, there are twelve possible rotations of one of the six faces relative to the rest of the cube. That is, each face can rotate in two directions, both in the same plane but opposite each other. A system that knows the initial pattern of face segments can track the twelve possible rotations to determine any subsequent face segment pattern based on the initial pattern and subsequent rotations. Such a process is analogous to dead reckoning for navigation. The inventive concept here is not limited to the 3x3 size or the cubical shape. Two exemplary non-limiting embodiments of the invention are described next. The first is a method that does not require rotation sensors. The second embodiment is a method that does not require cubelet signature sensors.

The first exemplary embodiment of pattern tracking is described with reference to the flow chart of Fig. 20. The tracking is executed on a three-dimensional puzzle having a shell formed by multiple shell segments. Each shell segment is free to move relative to an adjacent shell segment, and multiple unique signatures located at the shell segments.

The first step is to obtain the initial pattern of the shell segments on the faces. (Step S1.) Non-limiting examples of obtaining the initial pattern include: retrieving the pattern from the puzzle's memory, such as when the puzzle was used last; using a given value that results from a factory reset; manual data entry from a peripheral device, such as a smartphone; determined data produce by photographing the puzzle; and using the initialization of the present invention.

The next step is to use at least two signature sensors within the shell to sense the unique signatures of the shell segments moving into the proximity of the sensors. (Step S2.)

The following step is to provide data to processing circuitry based on the sensed signatures. (Step S3.) The processing circuitry determines from the data the identification of the proximate shell segments to determine a new shell segment pattern.

One exemplary use of the method is on three-dimensional puzzles in which the shell has six faces, which collectively form a cube. In this particular case, the shell segments comprise six central cubelets, eight vertex cubelets, and twelve central edge cubelets. The central cubelets each are on a different face of the shell and each contact a separate post extending from a core along the axis of rotation of the face. The unique signatures are located at the vertex and central edge cubelets.

The second exemplary embodiment of pattern tracking briefly mentions above is described with reference to the flow chart of Fig. 21. The tracking is executed on a three-dimensional puzzle having a shell that has at least four faces and is formed by multiple shell segments. Each shell segment is free to move relative to an adjacent shell segment, and the faces are free to rotate about axes extending from a core toward the faces.

The first step is to obtain an initial pattern of the shell segments on the faces. (Step S1.) Non-limiting examples of obtaining the initial pattern are provided above in the discussion of the last embodiment.

The next step is to sense the rotation of the faces. (Step S2.) Rotation sensors of the types discussed above may be used for this sensing.

The following step is to provide data to processing circuitry based on the rotation of the faces. (Step S3.) The processing circuitry determines from the face rotation data the movement of the shell segments to determine a new shell segment pattern.

An exemplary use of this method is on a three-dimensional puzzle in which the shell has six faces, which collectively form a cube. The shell segments are six central cubelets, eight vertex cubelets, and twelve central edge cubelets. The central cubelets each are on a different face of the shell and each contact a separate post extending from the core along the axis of rotation of the face.

Another aspect of the invention is engaging the multiple player's use of the puzzle for online competitions worldwide. A central server may send unique sets of moves for the players, such as a different sequence of rotations for each user, as handicaps to make them all reach the same cube pattern as a "fair match" with similar initial conditions. The information from the users may be collected and ranking statistics provided. The statistics may include bout duration, number of moves, rotation speed, and personal records.

Having thus described exemplary embodiments of the invention, it will be apparent that various alterations, modifications, and improvements will readily occur to those skilled in the art. There are alternations, modifications, and improvements of the disclosed invention, though not expressly described above, which are nonetheless within the scope of the claims. Accordingly, the foregoing discussion is intended to be illustrative only; the invention is limited and defined only by the following claims.

## Claims

1. A three-dimensional puzzle comprising:
a shell comprising at least four faces (76u, 76r, 76d, 761) and formed by multiple shell segments, each shell segment being free to move relative to an adjacent shell segment;
a core (84) within the shell, the faces being free to rotate relative to the core about axes extending from the core toward the faces;
for each face, a rotation sensor (92, 94) operative to sense rotation degree and direction of the face relative to the core and provide data to a processing circuitry based on the rotation of the faces;
a processing circuitry (88) located within the three-dimensional puzzle and configured to determine shell segment pattern based on (i) an obtained initial pattern, and (ii) said data; and
communication circuitry to transmit shell segment pattern data to an external client; and
wherein the initial pattern is obtained by any one of the following methods: retrieving the pattern from the puzzle's memory; using a given value that results from a factory reset; manual data entry from a peripheral device; photographing the puzzle; and using the initialization of the puzzle.

2. The three-dimensional puzzle of claim 1, further comprising (i) unique signatures located at the shell segments, and (ii) at least one signature sensor within the shell to provide data with respect to an identity and orientation of vertex shell segments based on sensed signatures.

3. The three-dimensional puzzle of claim 2, wherein said processing circuitry (88) is further configured to correct errors in the determination after a perceived rotation of a puzzle face, by:
tracking the rotation of shell segments as if the rotation were completed and tracking the rotation of shell segments as if the rotation were not completed;
using the at least one signature sensor to sense the unique signatures of proximate shell segments and determining their identities based on the sensed unique signatures;
dismissing a tracking controverted by the identification of the proximate shell segments; and
confirming the tracking that is not dismissed.

4. The three-dimensional puzzle of claim 1, wherein said at least one rotation sensor (128, 130) is positioned within the core.

5. A method of determining shell pattern on a three-dimensional puzzle, the puzzle having (i) a shell having at least four faces (76u, 76r, 76d, 761) and formed by multiple shell segments, each shell segment being free to move relative to an adjacent shell segment, (ii) a core (84) within the shell, the faces being free to rotate relative to the core about axes extending from the core toward the faces, and (iii) at least one sensor (92, 94) configured to detect said moving with respect to at least some of said shell segments:
receiving a pattern of said shell segments; and
calculating, after one or more rotations of said faces, a current pattern of said shell segments based on said detecting, at a processing circuitry (88) located within the three-dimensional puzzle; and
wherein the received pattern of said shell segments is obtained by any one of the following methods: retrieving the pattern from the puzzle's memory; using a given value that results from a factory reset; manual data entry from a peripheral device; photographing the puzzle; and using the initialization of the puzzle.

## Patentansprüche

1. Dreidimensionales Puzzle, umfassend:
eine Hülle, welche wenigstens vier Flächen (76u, 76r, 76d, 76l) umfasst und durch mehrere Hüllensegmente gebildet ist, wobei jedes Hüllensegment dazu frei ist, sich bezüglich eines benachbarten Hüllensegments zu bewegen;
einen Kern (84) innerhalb der Hülle, wobei die Flächen dazu frei sind, bezüglich des Kerns um Achsen zu rotieren, welche sich von dem Kern in Richtung der Flächen erstrecken;
für jede Fläche einen Rotationssensor (92, 94), welcher dazu betreibbar ist, einen Rotationsgrad und eine Richtung der Fläche bezüglich des Kerns zu erfassen und Daten zu einer Verarbeitungsschaltung auf Grundlage der Rotation der Flächen bereitzustellen;
eine Verarbeitungsschaltung (88), welche innerhalb des dreidimensionalen Puzzles angeordnet und dazu eingerichtet ist, ein Hüllensegment-Muster auf Grundlage von (i) einem erhaltenen anfänglichen Muster und (ii) den Daten zu bestimmen; und eine Kommunikationsschaltung zum Übertragen von Hüllensegment-Musterdaten zu einem externen Client; und
wobei das anfängliche Muster durch eines der folgenden Verfahren erhalten wird: Beziehen des Musters aus dem Speicher des Puzzles; unter Verwendung eines gegebenen Werts, welcher aus einem Werksrücksetzen resultiert; einem manuellen Dateneintrag von einer Peripherievorrichtung; Fotografieren des Puzzles; und Verwenden der Initialisierung des Puzzles.

2. Dreidimensionales Puzzle nach Anspruch 1, ferner umfassend (i) eindeutige Signaturen, welche an den Hüllensegmenten angeordnet sind und (ii) wenigstens einen Signatursensor innerhalb der Hülle zum Bereitstellen von Daten bezüglich einer Identität und Orientierung von Eck-Schalensegmenten auf Grundlage von erfassten Signaturen.

3. Dreidimensionales Puzzle nach Anspruch 2, wobei die Verarbeitungsschaltung (88) ferner dazu eingerichtet ist, Fehler in der Bestimmung nach einer wahrgenommenen Rotation einer Puzzlefläche zu korrigieren durch:
Verfolgen der Rotation der Hüllensegmente, als ob die Rotation abgeschlossen wäre, und Verfolgen der Rotation von Hüllensegmenten, als ob die Rotation nicht abgeschlossen wäre;
Verwenden des wenigstens einen Signatursensors zum Erfassen der eindeutigen Signaturen von nahen Hüllensegmenten und Bestimmen ihrer Identitäten auf Grundlage der erfassten eindeutigen Signaturen;
Verwerfen einer Verfolgung, welcher durch die Identifikation der nahen Hüllensegmente widersprochen wird; und
Bestätigen der Verfolgung, welche nicht verworfen wurde.

4. Dreidimensionales Puzzle nach Anspruch 1, wobei der wenigstens eine Rotationssensor (128, 130) innerhalb des Kerns positioniert ist.

5. Verfahren zum Bestimmen eines Hüllenmusters an einem dreidimensionalen Puzzle, wobei das Puzzle (i) eine Hülle, welche wenigstens vier Flächen (76u, 76r, 76d, 761) aufweist und durch mehrere Hüllensegmente gebildet ist, wobei jedes Hüllensegment dazu frei ist, sich bezüglich eines benachbarten Hüllensegments zu bewegen, (ii) einen Kern (84) innerhalb der Hülle, wobei die Flächen dazu frei sind, bezüglich des Kerns um Achsen zu rotieren, welche sich von dem Kern in Richtung der Flächen erstrecken, und (iii) wenigstens einen Sensor (92, 94) aufweist, welcher dazu eingerichtet ist, die Bewegung bezüglich wenigstens einiger der Hüllensegmente zu detektieren:
Erhalten eines Musters der Hüllensegmente; und
Berechnen, nach einer oder mehreren Rotationen der Flächen, eines momentanen Musters der Hüllensegmente auf Grundlage des Detektierens bei einer Verarbeitungsschaltung (88), welche innerhalb des dreidimensionalen Puzzles angeordnet ist; und
wobei das empfangene Muster der Hüllensegmente durch eines der folgenden Verfahren erhalten wird: Beziehen des Musters aus dem Speicher des Puzzles; unter Verwendung eines gegebenen Werts, welcher aus einem Werksrücksetzen resultiert; einem manuellen Dateneintrag von einer Peripherievorrichtung;
Fotografieren des Puzzles; und Verwenden der Initialisierung des Puzzles.

## Revendications

1. Puzzle tridimensionnel comportant :
une coque comportant au moins quatre faces (76u, 76r, 76d, 761) et formée par plusieurs segments de coque, chaque segment de coque étant libre de se déplacer par rapport à un segment de coque adjacent ;
un noyau (84) à l'intérieur de la coque, les faces étant libres de tourner par rapport au noyau autour d'axes s'étendant du noyau vers les faces ;
pour chaque face, un capteur de rotation (92, 94) servant à détecter le degré de rotation et la direction de la face par rapport au noyau et fournir des données à une circuiterie de traitement sur la base de la rotation des faces ;
une circuiterie de traitement (88) située à l'intérieur du puzzle tridimensionnel et configurée pour déterminer un motif de segment de coque sur la base (i) d'un motif initial obtenu et (ii) desdites données ; et
une circuiterie de communication destinée à transmettre des données de modèle de segment de coque à un client externe ; et
dans lequel le motif initial est obtenu par l'un quelconque des procédés suivants : la récupération du motif à partir de la mémoire du puzzle ; l'utilisation d'une valeur donnée qui résulte d'une réinitialisation d'usine ; la saisie manuelle de données à partir d'un dispositif périphérique ; la photographie du puzzle ; et l'utilisation de l'initialisation du puzzle.

2. Puzzle tridimensionnel selon la revendication 1, comportant en outre (i) des signatures uniques situées au niveau des segments de coque et (ii) au moins un capteur de signature à l'intérieur de la coque pour fournir des données concernant une identité et une orientation de segments de coque de sommet sur la base de signatures détectées.

3. Puzzle tridimensionnel selon la revendication 2, dans lequel ladite circuiterie de traitement (88) est en outre configurée pour corriger des erreurs dans la détermination après une rotation perçue d'une face de puzzle, en :
suivant la rotation des segments de coque comme si la rotation était terminée et en suivant la rotation des segments de coque comme si la rotation n'était pas terminée ;
utilisant l'au moins un capteur de signature pour détecter les signatures uniques de segments de coque proches et en déterminant leurs identités sur la base des signatures uniques détectées ;
rejetant un suivi réfuté par l'identification des segments de coque proches ; et
confirmant le suivi qui n'est pas rejeté.

4. Puzzle tridimensionnel selon la revendication 1, dans lequel ledit au moins un capteur de rotation (128, 130) est positionné à l'intérieur du noyau.

5. Procédé de détermination d'un motif de coque sur un puzzle tridimensionnel, le puzzle ayant (i) une coque ayant au moins quatre faces (76u, 76r, 76d, 761) et formée par plusieurs segments de coque, chaque segment de coque étant libre de se déplacer par rapport à un segment de coque adjacent, (ii) un noyau (84) à l'intérieur de la coque, les faces étant libres de tourner par rapport au noyau autour d'axes s'étendant du noyau vers les faces, et (iii) au moins un capteur (92, 94) configuré pour détecter ledit déplacement par rapport à au moins certains desdits segments de coque :
la réception d'un motif desdits segments de coque ; et
le calcul, après une ou plusieurs rotations desdites faces, d'un motif actuel desdits segments de coque sur la base de ladite détection, au niveau d'une circuiterie de traitement (88) située à l'intérieur du puzzle tridimensionnel ; et
dans lequel le motif reçu desdits segments de coque est obtenu par l'un quelconque des procédés suivants : la récupération du motif à partir de la mémoire du puzzle ; l'utilisation d'une valeur donnée qui résulte d'une réinitialisation d'usine ; la saisie manuelle de données à partir d'un dispositif périphérique ; la photographie du puzzle ; et l'utilisation de l'initialisation du puzzle.
